# EUROPÄISCHE PATENTSCHRIFT

(11) **EP 2 126 979 B1**
(45) Veröffentlichungstag und Bekanntmachung des Hinweises auf die Patenterteilung: **23.05.2018**
(21) Anmeldenummer: 07819887.6
(22) Anmeldetag: 21.11.2007
(51) Int. Cl.: H02S 10/10, H02S 40/38

(54) **VORRICHTUNG ZUR UMWANDLUNG UND SPEICHERUNG VON ENERGIE**
DEVICE FOR THE CONVERSION AND STORAGE OF ENERGY
DISPOSITIF DE CONVERSION ET D'ACCUMULATION D'ÉNERGIE

(30) Priorität: 27.11.2006 DE 102006055883
(43) Veröffentlichungstag der Anmeldung: 02.12.2009
(73) Patentinhaber: Fraunhofer-Gesellschaft zur Förderung der angewandten Forschung e.V., 80686 München (DE)
(72) Erfinder: SPIES, Peter, 91074 Herzogenaurach (DE); ROHMER, Günter, 91058 Erlangen (DE); TÜBKE, Jens, 76337 Waldbronn (DE); HEBLING, Christopher, 79100 Freiburg (DE); BÖTTNER, Harald, 79108 Freiburg (DE)
(74) Vertreter: Zinkler, Franz
(86) Internationale Anmeldenummer: PCT/EP2007/010091
(87) Internationale Veröffentlichungsnummer: WO 2008/064808

(56) Entgegenhaltungen:
- WO-A-94/20802
- WO-A-03/008803
- WO-A-03/031341
- WO-A-2004/090327
- DE-A1- 10 137 588
- DE-U1- 8 801 229
- DE-U1- 29 914 308
- DE-U1-202004 012 611
- JP-A- H09 245 842
- JP-A- 2001 308 356
- US-A1- 2004 124 711

## Beschreibung

Die vorliegende Erfindung bezieht sich auf eine Vorrichtung zur Umwandlung und Speicherung von Energie, wie sie in zunehmendem Maße in mobilen Endgeräten vorkommen.

Mobile Endgeräte besitzen zur Versorgung mit Energie immer einen geeignet dimensionierten Energiespeicher, wie beispielsweise eine Batterie oder einen Akkumulator. Dieser muss in regelmäßigen Abständen nachgeladen werden und schränkt so die Mobilität des Nutzers erheblich ein. Mobile Endgeräte, wie beispielsweise Mobilfunktelefone, Digitalkameras, portable Computer, PDAs, Uhren, etc. unterscheiden sich in ihrem Energiebedarf, haben jedoch gemeinsam, dass sie einen Energiespeicher, zumeist in Form einer Batterie besitzen, der in regelmäßigen zeitlichen Abschnitten, die sich nach der Nutzung der jeweiligen Endgeräte richten, nachgeladen bzw. ersetzt werden müssen. Die Energiespeicher, z. B. die Batterie, versorgt die elektronischen Schaltungen des Endgeräts mit Energie und muss abhängig von Kapazität und Verbrauch des Endgerätes nachgeladen oder ersetzt werden, was je nach Anwendungsfall umständlich ist, die Mobilität des Nutzers einschränkt, bzw. die Zufriedenheit eines Nutzers beeinträchtigen kann. In vielen Fällen ist zur Nachladung des Energiespeichers ein meist externes Ladegerät nötig, welches für eine gewisse Dauer und abhängig von einem Ladestrom und der nachzuladenden Kapazität mit der Netzstromversorgung verbunden werden muss. Insbesondere während dieser Nachladephasen, ist die Mobilität des Endgerätes erheblich eingeschränkt, bzw. nicht mehr gegeben.

Erste Ansätze einer netzunabhängigen Energieversorgung benutzen Energiewandler wie Solarzellen oder Thermogeneratoren, bzw. Thermowandler, die aus der Umgebung Energie zur Versorgung und Nachladung von mobilen Endgeräten gewinnen können. Voraussetzung hierfür ist immer das Vorhandensein der umzuwandelnden Energieform wie Licht, z. B. Sonnenlicht, oder Wärme, was wiederum von der Anwendung und Umgebung abhängig ist. Dadurch wird das Einsatzgebiet für solche alternativen Energiewandler stark eingeschränkt.

Die Deckung der zum vollständig autarken Betrieb benötigten Energie durch einen solchen Energiewandler, ist nicht bekannt. Abhängig vom Leistungsverbrauch und der Anwendungsumgebung eines mobilen Endgerätes, muss das Energieversorgungssystem immer neu dimensioniert und optimiert werden, so dass eine Energieversorgung eines mobilen Endgerätes mit einem einzigen netzunabhängigen Energiewandler nicht realisierbar ist.

Beispielsweise die Verwendung eines Mobilfunktelefons, lässt sich zugunsten einer Kundenzufriedenheit, nicht an das Vorhandensein von beispielsweise Sonnenlicht oder einer Mindesttemperatur binden. Das Spektrum an mobilen Endgeräten wird ständig erweitert, beispielsweise durch Navigationsgeräte, mobile TV-Geräte, etc., so dass für die verschiedenen Endgeräte auch ein entsprechend breites Spektrum an unterschiedlichen Energiespeichern und unterschiedlichen Ladereglern nötig ist.

Ein weiterer Nachteil derzeitiger Energiespeicher ist, dass ein Austausch oder Ersatz der Energiespeicher verschiedener Geräte untereinander aus Gründen der Kompatibilität der Energiespeicher, die sich in ihrer Kapazität, ihrem Volumen und ihrer Form erheblich unterscheiden, nicht stattfinden. Ferner sind die Anschlussmöglichkeiten der derzeit bekannten Energiespeicher äußerst different, so dass auch aufgrund der Vielfältigkeit dieser Anschlussmöglichkeiten eine Kompatibilität untereinander nicht gegeben ist.

Ein weiterer Nachteil derzeitiger Energieversorgungslösungen in mobilen Endgeräten ist, dass die Energie aus einem mobilen Energiespeicher nun mit großem technischen Aufwand und mit deutlichem Verlust an einen anderen Energiespeicher weitergegeben werden kann.

Die DE 103 33 828 A1 offenbart eine Einrichtung zur Energiegewinnung, -speicherung und -bereitstellung an Tragebehältnissen, insbesondere bei Aktenkoffern, Koffern und Taschen, die eine Umwandlung natürlicher Energiequellen wie Solarenergie, körperliche Bewegungsenergie und durch Temperaturunterschiede gewonnene Energie speichert und zur Energieversorgung für Verschluss- und Sicherheitseinrichtungen, Bedien- und Anzeigeeinrichtungen sowie externen Energieverbrauch bereitstellt. Durch die Einrichtung wird eine von unterschiedlichen Bedingungen bei der Energiegewinnung unabhängige kontinuierliche Energiebereitstellung ermöglicht.

Die DE 202 20 148 U1 offenbart eine mobile Energiespeicher- und Energieversorgungseinrichtung, die ausschließlich Energie von primären natürlichen Energiequellen, wie beispielsweise der Solarenergie und/oder der Bewegungsenergie des menschlichen Körpers, in gespeicherte Energie umwandelt und Energieabnehmer versorgt, die dadurch gekennzeichnet ist, dass die die Energiequellen über eine zentrale Energiespeicherung und Energieversorgung steuernde Steuereinheit mit mindestens einer als Hauptenergiespeicher dienenden mechanischen Energiespeichereinrichtung verbunden sind.

Die DE 101 37 588 A1 bezieht sich auf ein Anzeigesystem zur lokalen Darstellung von Informationen, welches eine Zentraleinheit und wenigstens eine Anzeigeeinrichtung aufweist. Die Zentraleinheit enthält eine Sendeeinrichtung zur drahtlosen Übertragung von Daten an die Anzeigeeinrichtung. Die Anzeigeeinrichtung besitzt einen Empfänger, eine damit verbundene elektronische Steuerung, einen Datenspeicher zur Zwischenspeicherung der empfangenen Daten sowie mindestens ein durch die elektronische Steuerung angesteuertes Display zur Anzeige der übertragenen und gespeicherten Daten. Die Anzeigeeinrichtung weist außerdem eine Stromversorgungseinheit zur Umwandlung von Energie aus der Umgebung einer elektrischen Energie sowie einen Energiespeicher zur Zwischenspeicherung der elektrischen Energie und zur Versorgung der elektronischen Steuerung auf.

Die DE 20 2004 012 611 U1 offenbart ein modulares, aufrüstbares und funktionskombiniertes Diagnosesystem mit autonomer Stromversorgung zur Überwachung eines Ladegutes, zur Ermittlung des technischen Zustands und der Betriebsdaten von Schienenfahrzeugen ohne eigenen Antrieb.

Die WO 2004/090327 A2 offenbart eine Versorgungseinheit für Strom und Wasser auf der Basis erneuerbarer Energien. Die Versorgungseinheit besteht aus einem kastenförmigen Profilrahmen, dessen Grundseite auf Rädern steht und auf dessen Oberseite ein von oben gesehen quadratischer Rahmen angeordnet ist, der ein Solarpanel enthält. Dieser ist um eine Horizontalachse schwenkbar an der einen Oberseite des kastenförmigen Profilrahmens angelenkt. An allen Seiten dieses quadratischen Rahmens befindet sich je ein peripherer quadratischer Rahmen gleicher Größe, der je ein weiteres Solarpanel enthält und schwenkbar angelenkt ist, so dass aus den fünf quadratischen Rahmen bei deren abgeschwenkter Lage eine Kubusform gebildet wird. Die peripher angelenkten quadratischen Rahmen sind in die Ebene des zentralen quadratischen Rahmens schwenkbar und in dieser Schwenklage zum zentralen quadratischen Rahmen arretierbar. Der kastenförmige Profilrahmen enthält mehrere von einer Seite schubladenartig einschiebbare und in der eingeschobenen Lage arretierbare kastenartige Module für die verschiedenen Funktionen wie Akkumulation von Energie aus Sonne und Wind, Trinkwasseraufbereitung, Pumpen von Wasser, Abgabe von elektrischem Strom oder Gleichstrom-Wasserstofferzeugung mittels Brennstoffzellen.

Die DE 196 15 943 A1 beschreibt, dass bei einem Multiblock-Robot-System die Vorteile der flexiblen Multiachsen-Anwendungen durch Multiblock-Normteile, für die kostengünstige Energiegewinnung aus Sonnen- und Windkraft, die Energiespeicherung und die Energieabgabe genutzt werden soll. Zur Lösung dieser Aufgabe ist gemäß der DE 196 15 943 A1 vorgesehen, dass Multiblock-Normteile gebildet werden, die aus Flanschaufsteckgehäusen mit integrierten Solareinheiten und Aufsteckflanschen bestehen und auf Zentralgehäuse aufgesteckt werden, die Einbauelemente der Solarelektronik und Spannungwandler beinhalten und an den Außenkanten und auf der Rückseite mit Drehflansch-Steckverbindungen ausgerüstet sind, dass die Multiblock-Normteile mit Solareinheiten und Multiblock-Gelenkarmen kombiniert werden, mit Flanschaufsteckgehäusen mit zentraler, vertikaler Stützfunktion, mit horizontalen Verbund-Flanschaufsteckgehäusen, mit Multiblock-Gelenkrahmen, die aus Flanschaufsteckgehäusen mit Aufsteckflanschen horizontal und vertikal zueinander zusammengesteckt werden, außerdem mit Flanschaufsteckgehäusen mit integrierten Batterieeinheiten, die hintereinander aufgesteckt werden, Batterielinien bilden und sich selbständig durch Magnetschalter in den Drehflanschsteckverbindungen beim Batterieaustausch entriegeln und verriegeln.

Die DE 197 14 512 C2 offenbart eine maritime Kraftwerksanlage mit Herstellungsprozess zur Gewinnung, Speicherung und zum Verbrauch von regenerativer Energie, wobei die Kraftwerksanlage auf einer gemeinsamen Trägerstruktur Vorrichtungen aufweist, um Energie nach mindestens zwei unterschiedlichen Methoden aus dem Umfeld der Anlage wie Meerwärme, Meereswellen, Windkraft und Solarstrahlung unter Berücksichtigung der Gegebenheiten des Standortes für einen kontinuierlichen Energiestrom zu gewinnen und wobei die Kraftwerksanlage mit mindestens einem industriellen Herstellungsprozess direkt in die Anlage integriert oder in deren unmittelbarer Nähe verbunden ist und/oder in einer Gruppe von weiteren maritimen Kraftwerksanlagen, die sich in einem gemeinsamen Gebiet aufhalten, in einem Verbundnetz betrieben wird und wobei eine submarine Umkehrosmoseanlage verwendet wird.

Es ist die Aufgabe der vorliegenden Erfindung, ein Energieversorgungskonzept zu schaffen, welches erlaubt, für beliebige Endgeräte die zum autarken Betrieb nötige Energie bereitzustellen.

Die JP 201308356 offenbart ein Ladegerät für ein Mobiltelefon mit einer Solarzelle, die in einem polygonalen tragbaren Gehäuse angebracht ist, das Plus- und Minus-Anschlüsse an zumindest zwei Seiten aufweist. Die Plus- und Minus-Anschlüsse können auch mit entsprechenden Plus- und Minus-Anschlüssen anderer tragbarer Packages verbunden werden.

Die JP 09245842 offenbart eine Batterie, die in verschiedenen Umgebungen verwendet werden kann, und die z. B. in Form einer AA-Batterie ausgestaltet ist. Diese Batterie umfasst einen piezoelektrischen Körper, eine Solarzelle und eine elektrische Speichereinrichtung, um erzeugte elektrische Leistung im tragbaren Gehäuse zu speichern. An einem ersten Gehäuseteil ist ein erster Kontakt angebracht. An einem zweiten gegenüberliegenden Gehäuseteil ist ein zweiter Kontakt angebracht, und die beiden Gehäuseteile sind gegeneinander zu verdrehen, um über den piezoelektrischen Körper elektrische Energie zu erzeugen.

Diese Aufgabe wird gelöst durch eine Vorrichtung zur Umwandlung und Speicherung von Energie gemäß Anspruch 1 und ein Verfahren zur Umwandlung und Speicherung von Energie gemäß Anspruch 14.

Die vorliegende Erfindung schafft eine Vorrichtung zur Umwandlung und Speicherung von Energie, die eine Mehrzahl von verschiedenen Energiewandlern zum Wandeln von Energie in verschiedenen Energieformen in elektrische Energie aufweist. Die Vorrichtung umfasst ferner einen Energiespeicher zum Speichern der elektrischen Energie und eine Schnittstelle zur Abgabe der Energie an einen Verbraucher.

Die vorliegende Erfindung schafft ferner ein Verfahren zur Umwandlung und Speicherung von Energie mit einem Schritt des Wandelns von Energie in verschiedenen Energieformen in elektrische Energie, einem Schritt des Speicherns der elektrischen Energie in einem Energiespeicher und einem Schritt des Abgebens der Energie an einen Verbraucher.

Der Kerngedanke der vorliegenden Erfindung ist die Kombination von unterschiedlichen Energiewandlern, wie beispielsweise Solarzellen, Thermogeneratoren, mechanische Energiewandler usw., mit einem geeigneten Energiespeicher, so dass die daraus entstehende Vorrichtung als universelles Energieversorgungsmodul für beliebige mobile Endgeräte eingesetzt werden kann. Das technische Anwendungsgebiet der vorliegenden Erfindung umfasst somit beliebige mobile Endgeräte wie Mobiltelefone, Digitalkameras, PDAs, Uhren usw., wobei zusätzlich auch Anwendungen in Kombination mit
fest installierten Endgeräten denkbar sind. Ausführungsbeispiele der vorliegenden Erfindung können herkömmliche wiederaufladbare Akkumulatoren in Endgeräten ersetzen, die durch Verbindung mit dem Energieversorgungsnetz nachgeladen werden können und so im Falle von mobilen Endgeräten die Mobilität eines Nutzers einschränken können. Ausführungsbeispiele können ferner geeignete Schnittstellen umfassen, die es erlauben, die Energieversorgung an beliebige Verbraucher anzupassen, d. h. die es erlauben, mehrere erfindungsgemäße Vorrichtungen miteinander zu kombinieren, um eine entsprechende Energieausbeute zu erhalten. Dabei können Ausführungsbeispiele, Steckverbindungen, die eine mechanische oder elektrische Kopplung vorsehen können, aufweisen. In Ausführungsbeispielen können auch Außenkontakte eingesetzt werden, durch die beispielsweise durch bloßes geometrisches Anordnen, z.B. Stapeln oder Legen nebeneinander, elektrische Kopplungen hergestellt werden können. Weitere Schnittstellen können ferner eine einfache drahtlose Übertragung der gespeicherten Energie, so dass Geräte, welche mit erfindungsgemäßen Modulen ausgestattet sind, bei Bedarf auch untereinander Energie austauschen können, ermöglichen. Ebenso kann die Energie aus einem zentralen Speichermodul drahtlos oder auch drahtgebunden an andere Endgeräte, d. h. beliebige Verbraucher, weitergeleitet werden.

Ausführungsbeispiele der vorliegenden Erfindung werden anhand der beigefügten Figuren näher beschrieben. Es zeigen:
- Fig. 1: ein Blockdiagramm eines Ausführungsbeispiels der vorliegenden Erfindung;
- Fig. 2: ein Ausführungsbeispiel der vorliegenden Erfindung; und
- Fig. 3: eine Kombination von Ausführungsbeispielen der vorliegenden Erfindung.

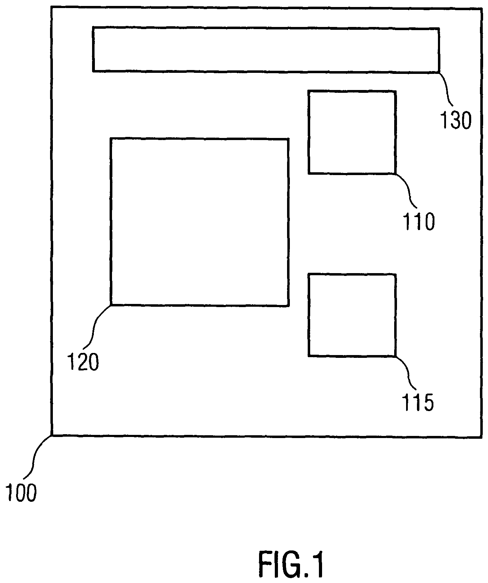

Fig. 1 zeigt eine Vorrichtung 100 zur Umwandlung und Speicherung von Energie. Die Vorrichtung weist eine Mehrzahl von verschiedenen Energiewandlern auf, wobei in der Fig. 1 zwei Energiewandler 110 und 115 dargestellt sind. Die Energiewandler 110 und 115 dienen zum Wandeln von Energie in verschiedenen Energieformen in elektrische Energie. Die Vorrichtung 100 umfasst ferner einen Energiespeicher 120 und eine Schnittstelle 130 zur Abgabe der Energie an einen Verbraucher.

Ausführungsbeispiele der vorliegenden Erfindung stellen somit eine Kombination von mehreren Energiewandlern und Speichern, die mit der nötigen Steuer- und Regelelektronik versorgt sein können, in einem Modul dar, das in seiner Größe und damit Energieausbeute skalierbar ist, und somit schnell an verschiedene Verbraucher angepasst werden kann. Ausführungsbeispiele können Module aufweisen, die geeignete Schnittstellen besitzen, um gegebenenfalls Energie auch drahtlos an gleichartige Module übertragen zu können. Ausführungsbeispiele können ferner Schnittstellen zur direkten elektrischen Kopplung, wie beispielsweise Kontakte an den Außenseiten, entlang von Kanten oder Oberflächen, Stecker oder Kupplungen bzw. Buchsen, aufweisen. Ausführungsbeispiele können dann beispielsweise auch durch Kabel, Steckverbindungen oder bloßes geometrisches Anordnen elektrisch miteinander koppelbar sein. Ferner können auch mechanische Kopplungen vorgesehen sein, wie z.B. Steckverbindungen, Arretierungseinrichtungen, selbst Druckknöpfe usw.

Ein Ausführungsbeispiel der vorliegenden Erfindung stellt also ein Energieversorgungsmodul dar, welches mit Hilfe einer Kombination von unterschiedlichen Energiewandlern für beliebige Endgeräte die zum autarken Betrieb nötige Energie bereitstellt. Es besitzt ferner einen Energiespeicher, in dem überschüssige Energie zwischengespeichert werden kann, um so Betriebszeiten, in denen keine umwandelbare Energie zur Verfügung steht, zu überbrücken.

Weiterhin ist ein Ausführungsbeispiel der vorliegenden Erfindung universell einsetzbar und in der Lage, Energie an gleichartige Module drahtlos zu übermitteln. Durch entsprechende Schnittstellen können mehrere Module miteinander kombiniert werden, um so die Energieausbeute und den Energiespeicher an die Anforderungen des Verbrauchers an die Umgebung anzupassen. Ausführungsbeispiele der vorliegenden Erfindung sind somit in ihrer Größe und ihrer Energiekapazität skalierbar und können daher an beliebige Verbraucher angepasst werden.

Die in Ausführungsbeispielen der vorliegenden Erfindung verwendeten Energiewandler, die in der Fig. 1 als die Energiewandler 110 und 115 dargestellt sind, können durch verschiedene Energiewandler wie Solarzellen und Thermowandler oder sonstiger weiterer alternativer Generatoren oder Energiewandler realisiert werden. In einem anderen Ausführungsbeispiel können sie innerhalb eines Bauteils integriert sein. Ferner können Ausführungsbeispiele über eine Überwachungselektronik verfügen, welche detektiert, aus welchem Energiewandler welche Energiemenge bereitgestellt wird und die bereitgestellten Energien kombiniert, wobei die Kombination der Energieströme elektrisch erfolgen kann und diese direkt oder auch indirekt einem Verbraucher oder einem Energiespeicher zur Verfügung gestellt werden. Ausführungsbeispiele können somit mit Ladereglern ausgestattet sein, die in der Lage sein können zum einem zwischen einzelnen Energiewandlern oder Energiespeichern umzuschalten und zum anderen Energiewandler oder Energiespeicher zu kombinieren, d.h. beispielweise erzeugte Ladeströme zu kombinieren oder verschiedenen Energiespeichern zuzuführen, bzw. anzupassen.

Ausführungsbeispiele der vorliegenden Erfindung können zu größeren Energieversorgungsmodulen kombiniert werden, wobei ein größeres Energieversorgungsmodul aus erfindungsgemäßen gleich aufgebauten Einheiten bestehen kann, welche alle die gleichen Systemkomponenten, also mehrere Energiewandler, gegebenenfalls Regler, Speicher etc. aufweisen. Ausführungsbeispiele der vorliegenden Erfindung besitzen weiterhin, z. B. an ihren Außenseiten, Schnittstellen, so dass beliebig viele miteinander kombiniert werden können, um die Ausgangsleistung und Speicherkapazität zu erhöhen. Durch die Anordnung der Schnittstellen können auch beliebige geometrische Formen erzielt werden. Beispielsweise können Ausführungsbeispiele eine kubische Gestalt annehmen und Kontakte entlang ihrer Oberfläche, wie beispielsweise entlang von Kanten, aufweisen. Ausführungsbeispiele können dann z.B. durch bloßes Stapeln elektrisch miteinander gekoppelt werden, wobei auch andere Kopplungen, wie z.B. über Steckverbindungen oder auch Haltemagnete usw. denkbar sind.

Zusätzlich besitzen Ausführungsbeispiele der vorliegenden Erfindung Schnittstellen zur drahtlosen Daten- und Energieübertragung. So wird ein Energieaustausch von benachbarten Geräten, welche mit Ausführungsbeispielen der vorliegenden Erfindung ausgestattet sind, ermöglicht.

Der in der Fig. 1 gezeigte Energiespeicher 120 kann in Ausführungsbeispielen der vorliegenden Erfindung beispielsweise durch einen Kondensator oder einen Superkondensator realisiert sein. Ein Ausführungsbeispiel weist dabei einen Kondensator auf, dessen Kapazität größer als ein Farad ist. Alternativ kann der Energiespeicher 120 auch durch eine Brennstoffzelle realisiert sein. In einer anderen Ausführungsform weist die erfindungsgemäße Vorrichtung eine Brennstoffzelle als Puffer auf, um Zeiten, zu denen keine umwandelbare Energie zur Verfügung steht, zu überbrücken. Der Energiespeicher 120 kann in anderen Ausführungsformen auch durch einen Akkumulator realisiert sein. Alternativ kann der Energiespeicher 120 auch austauschbar sein, so dass in diesem Ausführungsbeispiel die erfindungsgemäße Vorrichtung als Ladegerät für einen Energiespeicher realisiert wird.

Gemäß den obigen Ausführungen verfügt die erfindungsgemäße Vorrichtung über eine Schnittstelle 130 zur Abgabe der Energie an einen Verbraucher. Die Schnittstelle 130 kann dabei zur schnurlosen oder drahtgebundenen Übertragung von Energie ausgebildet sein, beispielsweise durch das Erzeugen eines magnetischen oder elektrischen Feldes. In anderen Ausführungsbeispielen ist die drahtlose Übertragung von Energie auch über andere Energieformen denkbar. Ein Ausführungsbeispiel der vorliegenden Erfindung weist ferner eine Kommunikationsschnittstelle auf, über die mit Endgeräten und anderen Vorrichtungen 100 zum Umwandeln und Speichern von Energie kommuniziert werden kann. Beispielsweise kann über die Kommunikationsschnittstelle mit einem Endgerät kommuniziert werden, um die Art und Weise der Bereitstellung der Energie festzulegen. Realisierungen der Kommunikationsschnittstelle sind sowohl drahtgebunden als auch schnurlos denkbar. Die Kommunikation mit anderen Vorrichtungen 100 zur Umwandlung und Speicherung von Energie kann in Ausführungsbeispielen der vorliegenden Erfindung beispielsweise dazu dienen, eine Kombination, z. B. eine Parallelschaltung oder Reihenschaltung der einzelnen Vorrichtungen 100 zu vereinbaren. Ausführungsbeispiele ermöglichen somit eine hohe Anpassungsvielfalt an verschiedenste Anforderungen der Verbraucher. Beispielsweise können über verschiedenartige Schnittstellen Spannungen und Ströme kombiniert und an einen Verbraucherbedarf angepasst werden.

Weitere Ausführungsbeispiele der vorliegenden Erfindung weisen eine Steuerung zum Steuern der Mehrzahl von verschiedenen Energiewandlern, der Energiespeicher und der Schnittstelle oder Kommunikationsschnittstelle auf. Die Steuerung kann beispielsweise einen oder mehrere Laderegler aufweisen, die den Energietransfer zwischen den Energiewandlern 110 und 115 und dem Energiespeicher 120 regeln, bzw. anpassen oder kombinieren. Die Steuerung kann in einem Ausführungsbeispiel auch die Überwachung der Schnittstellen übernehmen, um die Abgabe der Energie zu überwachen, bzw. mit anderen Vorrichtungen 100 oder Endgeräten zu koordinieren. Über die Kommunikationsschnittstelle könnte beispielsweise die Steuerung auch mit anderen Steuerungen, in anderen Vorrichtungen 100 oder Endgeräten, kommunizieren.

Ein weiteres Ausführungsbeispiel der vorliegenden Erfindung weist einen weiteren Energiespeicher auf, der sich in der Art der Speicherung der Energie von dem Energiespeicher 120 unterscheidet. Beispielsweise könnte die erfindungsgemäße Vorrichtung 100 in einem Ausführungsbeispiel einen Kondensator als Energiespeicher 120 aufweisen, und zusätzlich eine Brennstoffzelle oder einen chemischen Energiespeicher, usw. umfassen.

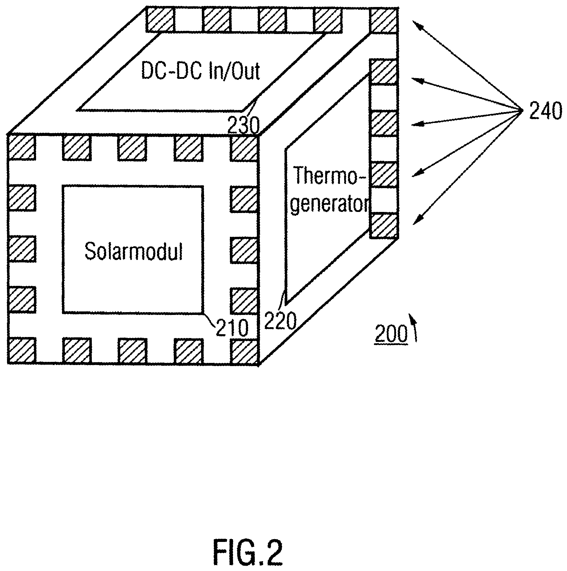

Fig. 2 zeigt ein Ausführungsbeispiel der vorliegenden Erfindung, das im Folgenden als Power Cube 200 bezeichnet wird. Der Power Cube entspricht einer kubischen Ausgestaltung eines Ausführungsbeispiels und verfügt z.B. über ein Solarmodul 210, einen Thermogenerator 220, eine DC-DC In/Out- (DC = Direct Current) Regler oder Spannungswandler, sowie Kontakte 240 zur Kombination mehrerer Module, die in der Fig. 2 schematisch an der Vorder- und Rückseite des Moduls, d. h. Power Cubes, dargestellt sind.

Der Power Cube 200 ist ein Ausführungsbeispiel der vorliegenden Erfindung, und umfasst eine Kombination aus der Solarzelle oder dem Solarmodul 210, einem Thermogenerator 220 und einem Speicherkondensator, einem Akkumulator oder einem anderen Energiespeicher, der in der Fig. 2 nicht dargestellt ist und sich im Innern des Power Cubes 200 befindet. Die Solarzelle 210 und der Thermogenerator 220 befinden sich auf Außenseiten des Power Cubes 200, damit sie bei Kombination mehrerer Power Cubes 200 nicht verdeckt werden. An den Kanten des Power Cubes befinden sich Kontakte 240, die bei einer Kombination von mehreren Power Cubes 200 diese elektrisch miteinander verbinden. An einer weiteren Außenseite befindet sich der Spannungswandler oder DC-DC In/Out 230, der die Ausgangsspannungen kombinierter Power Cubes 200 aneinander anpasst. Im Inneren des Moduls oder Power Cubes 200 befindet sich der Energiespeicher, der beispielsweise auch durch einen Kondensator, Superkondensator oder eine Brennstoffzelle realisiert sein kann. Ferner kann sich im Inneren des Power Cubes 200 weitere Steuer- und Regelelektronik befinden. Die Integration einer Mikrobrennstoffzelle ist ebenfalls denkbar, die beispielsweise, wenn keine umwandelbare Energie aus der Umwelt zur Verfügung steht, die Energieversorgung sicherstellt.

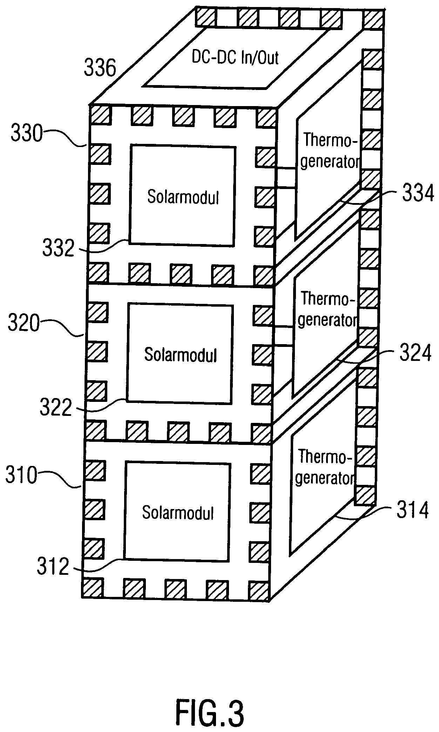

Fig. 3 zeigt eine Kombination von drei Power Cubes 310, 320 und 330, die dem anhand der Fig. 2 erläuterten Power Cube 200 entsprechen. Jeder der in der Fig. 3 dargestellten Power Cubes 310, 320 und 330 verfügt über je ein Solarmodul 312, 322 und 332, und über je einen Thermogenerator 314, 324 und 334. Ferner verfügt jeder Power Cube 310, 320 und 330 über einen Spannungswandler oder DC-DC In/Out, wobei in der Fig. 3 nur der Spannungswandler 336 des Power Cubes 330 zu sehen ist. Die in der Fig. 3 dargestellten Power Cubes 310, 320 und 330 sind über Kontakte, die sich an ihren Unter- bzw. Oberseiten befinden, elektrisch miteinander gekoppelt, so dass sie ihre Energien geeignet kombinieren können. Ausführungsbeispiele können demnach auch durch einfaches geometrische Anordnen kombinierbar sein, z.B. auch durch Stapeln oder einfaches Nebeneinanderlegen.

Die vorliegende Erfindung bietet den Vorteil, dass durch die Kombination von mehreren Energiewandlern, bzw. Power Cubes, sichergestellt wird, dass immer eine Art von umwandelbarer Energie zur Verfügung steht. So kann ein vollständig autarker Betrieb eines Endgerätes erreicht werden.

Ein weiterer Vorteil der vorliegenden Erfindung ist, dass durch die Kombinierbarkeit mehrerer Einzelmodule für jeden Verbraucher schnell und einfach ein geeignetes dimensioniertes Energieversorgungsmodul hergestellt werden kann. Durch die dadurch erreichte Skalierung eines einzelnen Moduls kann der gesamte Energiebedarf eines Verbrauchers gedeckt werden.

Ferner bieten Ausführungsbeispiele der vorliegenden Erfindung den Vorteil, dass durch die drahtlose Schnittstelle bei Bedarf Energie zwischen verschiedenen Endgeräten ausgetauscht werden kann. Die Module können durch die integrierte Ladeelektronik auch außerhalb des Endgerätes nachgeladen werden. Auf diese Weise können beliebig viele Module als Reserve mitgeführt werden und dann gegen Module, deren Energiespeicher leer sind, ausgetauscht werden.

### Bezugszeichenliste

- 100: Vorrichtung zur Umwandlung und Speicherung von Energie
- 110: Energiewandler
- 115: Energiewandler
- 120: Energiespeicher
- 130: Schnittstelle zur Abgabe der Energie an einen Verbraucher

- 200: Power Cube
- 210: Solarmodul/Solarzelle
- 220: Thermogenerator
- 230: DC-DC In/Out, Spannungswandler
- 240: Kontakte

- 310: Power Cube
- 312: Solarmodul/Solarzelle
- 314: Thermogenerator
- 320: Power Cube
- 322: Solarmodul/Solarzelle
- 324: Thermogenerator
- 330: Power Cube
- 332: Solarmodul/Solarzelle
- 334: Thermogenerator
- 336: DC-DC In/Out, Spannungswandler

## Patentansprüche

1. Vorrichtung (100) zur Umwandlung und Speicherung von Energie, mit folgenden Merkmalen:
einer Mehrzahl von verschiedenen Energiewandlern (110; 115) zum Wandeln von Energie in verschiedenen Energieformen in elektrische Energie;
einem Energiespeicher (120) zum Speichern der elektrischen Energie;
einer Schnittstelle (130) zur Abgabe der Energie an einen Verbraucher; und
einer Schnittstelle zur Kombination mit anderen Vorrichtungen zur Umwandlung und Speicherung von Energie, um eine Ausgangsleistung und Speicherkapazität zu erhöhen, wobei die Vorrichtung (100) Kanten aufweist, wobei die Schnittstelle zur Kombination Kontakte (240) an den Kanten aufweist, die ausgebildet sind, um bei einer Kombination mehrerer Vorrichtungen diese elektrisch miteinander zu verbinden.

2. Vorrichtung (100) gemäß Anspruch 1, bei der einer der verschiedenen Energiewandler (110; 115) eine Solarzelle oder ein Solarmodul, einen Thermowandler oder einen mechanischen Energiewandler aufweist.

3. Vorrichtung (100) gemäß einem der Ansprüche 1 oder 2, bei der der Energiespeicher (120) einen Kondensator oder Superkondensator aufweist.

4. Vorrichtung (100) gemäß einem der Ansprüche 1 bis 3, bei der der Energiespeicher (120) einen Kondensator mit einer Kapazität größer 1 Farad aufweist.

5. Vorrichtung (100) gemäß einem der Ansprüche 1 bis 4, bei der der Energiespeicher (120) eine Brennstoffzelle aufweist.

6. Vorrichtung (100) gemäß einem der Ansprüche 1 bis 5, bei der der Energiespeicher (120) austauschbar ist oder einen Akkumulator aufweist.

7. Vorrichtung (100) gemäß einem der Ansprüche 1 bis 6, bei der die Schnittstelle zur Abgabe der Energie ausgebildet ist, um Energie drahtgebunden zu übertragen.

8. Vorrichtung (100) gemäß einem der Ansprüche 1 bis 7, bei der die Schnittstelle zur Abgabe der Energie ausgebildet ist, um Energie schnurlos zu übertragen.

9. Vorrichtung (100) gemäß einem der Ansprüche 1 bis 8, bei der die Schnittstelle zur Abgabe der Energie ausgebildet ist, um ein magnetisches Feld zu erzeugen.

10. Vorrichtung (100) gemäß einem der Ansprüche 1 bis 9, bei der die Schnittstelle zur Abgabe der Energie ausgebildet ist, um ein elektrisches Feld zu erzeugen.

11. Vorrichtung (100) gemäß einem der Ansprüche 1 bis 10, die ferner eine Steuerung zum Steuern der Mehrzahl von verschiedenen Energiewandlern (110; 115), des Energiespeichers (120) und der Schnittstelle (130) oder einer Kommunikationsschnittstelle oder einen Laderegler aufweist.

12. Vorrichtung (100) gemäß einem der Ansprüche 1 bis 11, die ferner einen weiteren Energiespeicher aufweist, der sich in der Art der Speicherung der Energie von dem Energiespeicher (120) zum Speichern der elektrischen Energie unterscheidet.

13. Vorrichtung (100) gemäß einem der Ansprüche 1 bis 12 die kubisch ausgestaltet ist.

14. Verfahren zur Umwandlung und Speicherung von Energie mittels einer Vorrichtung nach einem der Ansprüche 1 bis 13 mit folgenden Schritten:
Wandeln von Energie in verschiedenen Energieformen mittels der Energiewandler in elektrische Energie;
Speichern der elektrischen Energie in dem Energiespeicher (120);
Kombinieren der Vorrichtung mit anderen Vorrichtungen zur Umwandlung und Speicherung von Energie über Kontakte an Kanten der Vorrichtung, um eine Ausgangsleistung und Speicherkapazität zu erhöhen; und Abgeben der Energie an einen Verbraucher.

15. System, das zwei Vorrichtungen gemäß Anspruch 13 aufweist, die geometrisch so zueinander angeordnet sind, dass die Schnittstellen zur Kombination der beiden Vorrichtungen elektrisch miteinander verbunden sind.

## Claims

1. An apparatus (100) for converting and storing energy, comprising:
a plurality of various energy converters (110; 115) for converting energy, which is present in various forms of energy, to electrical energy;
an energy store (120) for storing the electrical energy;
an interface (130) for outputting the energy to a consumer; and
an interface for combining with other apparatuses for converting and storing energy so as to increase an output power and storage capacity, the apparatus (100) comprising edges, the interface for combining comprising contacts (240) at the edges, wherein the contacts are configured to electrically interconnect several apparatuses when the same are combined.

2. The apparatus (100) as claimed in claim 1, wherein one of the various energy converters (110; 115) comprises a solar cell or a solar module, a heat converter or a mechanical energy converter.

3. The apparatus (100) as claimed in any of claims 1 or 2, wherein the energy store (120) comprises a capacitor or supercpacitor.

4. The apparatus (100) as claimed in any of claims 1 to 3, wherein the energy store (120) comprises a capacitor having a capacitance of more than 1 farad.

5. The apparatus (100) as claimed in any of claims 1 to 4, wherein the energy store (120) comprises a fuel cell.

6. The apparatus (100) as claimed in any of claims 1 to 5, wherein the energy store (120) is replaceable or comprises an accumulator.

7. The apparatus (100) as claimed in any of claims 1 to 6, wherein the interface for outputting the energy is configured to transmit energy in a wired manner.

8. The apparatus (100) as claimed in any of claims 1 to 7, wherein the interface for outputting the energy is configured to transmit energy in a wireless manner.

9. The apparatus (100) as claimed in any of claims 1 to 8, wherein the interface for outputting the energy is configured to generate a magnetic field.

10. The apparatus (100) as claimed in any of claims 1 to 9, wherein the interface for outputting the energy is configured to generate an electric field.

11. The apparatus (100) as claimed in any of claims 1 to 10, further comprising a controller for controlling the plurality of various energy converters (110; 115), the energy store (120) and the interface (130) or a communication interface or a charge regulator.

12. The apparatus (100) as claimed in any of claims 1 to 11, further comprising a further energy store, which differs from the energy store (120) for storing the electrical energy in the manner of storing the energy.

13. The apparatus (100) as claimed in any of claims 1 to 12, implemented in a cubic manner.

14. A method of converting and storing energy by means of an apparatus according to any of claims 1 to 13, comprising:
converting energy, which is present in various forms of energy, to electrical energy by means of the energy converters;
storing the electrical energy in the energy store (120) ;
combining the apparatus with other apparatuses for converting and storing energy via contacts at edges of the apparatus, so as to increase an output power and storage capacity; and
outputting the energy to a consumer.

15. A system comprising two apparatuses as claimed in claim 13, which are mutually arranged in a geometrical manner such that the interfaces for combining the two apparatuses are electrically connected to one another.

## Revendications

1. Dispositif (100) de conversion et d'accumulation d'énergie, aux caractéristiques suivantes:
une pluralité de convertisseurs d'énergie différents (110; 115) destinés à convertir de l'énergie sous différentes formes d'énergie en énergie électrique;
un accumulateur d'énergie (120) destiné à accumuler l'énergie électrique;
une interface (130) destinée à sortir l'énergie vers un consommateur; et
une interface destinée à combiner avec d'autres dispositifs de conversion et d'accumulation d'énergie, pour augmenter une puissance de sortie et une capacité d'accumulation, le dispositif (100) présentant des bords, où l'interface destinée à combiner présente des contacts (240) aux bords qui sont conçus pour connecter, lors d'une combinaison de plusieurs dispositifs, ces derniers électriquement l'un à l'autre.

2. Dispositif (100) selon la revendication 1, dans lequel l'un des différents convertisseurs d'énergie (110; 115) présente une cellule solaire ou un module solaire, un convertisseur de chaleur ou un convertisseur d'énergie mécanique.

3. Dispositif (100) selon l'une des revendications 1 ou 2, dans lequel l'accumulateur d'énergie (120) présente un condensateur ou un supercondensateur.

4. Dispositif (100) selon l'une des revendications 1 à 3, dans lequel l'accumulateur d'énergie (120) présente un condensateur d'une capacité supérieure à 1 Farad.

5. Dispositif (100) selon l'une des revendications 1 à 4, dans lequel l'accumulateur d'énergie (120) présente une pile à combustible.

6. Dispositif (100) selon l'une des revendications 1 à 5, dans lequel l'accumulateur d'énergie (120) est échangeable ou présente un accumulateur.

7. Dispositif (100) selon l'une des revendications 1 à 6, dans lequel l'interface destinée à sortir de l'énergie est conçue pour transmettre de l'énergie de manière filaire.

8. Dispositif (100) selon l'une des revendications 1 à 7, dans lequel l'interface destinée à sortir de l'énergie est conçue pour transmettre de l'énergie sans fil.

9. Dispositif (100) selon l'une des revendications 1 à 8, dans lequel l'interface destinée à sortir de l'énergie est conçue pour générer un champ magnétique.

10. Dispositif (100) selon l'une des revendications 1 à 9, dans lequel l'interface destinée à sortir de l'énergie est conçue pour générer un champ électrique.

11. Dispositif (100) selon l'une des revendications 1 à 10, présentant par ailleurs une commande destinée à commander la pluralité de convertisseurs d'énergie différents (110; 115), d'accumulateur d'énergie (120) et d'interface (130) ou d'une interface de communication ou un régulateur de charge.

12. Dispositif (100) selon l'une des revendications 1 à 11, présentant par ailleurs un autre accumulateur d'énergie qui diffère de l'accumulateur d'énergie (120) destiné à accumuler l'énergie électrique quant au type d'accumulation d'énergie.

13. Dispositif (100) selon l'une des revendications 1 à 12, qui est conçu en forme de cube.

14. Procédé de conversion et d'accumulation d'énergie au moyen d'un dispositif selon l'une des revendications 1 à 13, aux étapes suivantes consistant à:
convertir l'énergie sous différentes formes d'énergie au moyen des convertisseurs d'énergie en énergie électrique;
accumuler l'énergie électrique dans l'accumulateur d'énergie (120) ;
combiner le dispositif avec d'autres dispositifs destinés à convertir et accumuler l'énergie par l'intermédiaire de contacts aux bords du dispositif, pour augmenter la puissance de sortie et la capacité d'accumulation; et
sortir l'énergie vers un consommateur.

15. Système présentant deux dispositifs selon la revendication 13 qui sont disposés géométriquement l'un par rapport à l'autre de sorte que les interfaces destinées à combiner les deux dispositifs soient connectées électriquement l'une à l'autre.
